(19) **Europäisches Patentamt / European Patent Office / Office européen des brevets**

(11) **EP 4 446 128 B1**

(12) **EUROPEAN PATENT SPECIFICATION**

(45) Date of publication and mention of the grant of the patent:
**31.12.2025 Bulletin 2026/01**

(21) Application number: **22903754.4**

(22) Date of filing: **16.05.2022**

(51) International Patent Classification (IPC):
**B60C 19/00** *(2006.01)*    **B60C 17/00** *(2006.01)*
**B60C 9/02** *(2006.01)*    **B60C 1/00** *(2006.01)*
**B60C 13/00** *(2006.01)*

(52) Cooperative Patent Classification (CPC):
**B60C 19/00; B60C 17/0009;** B60C 1/0025;
B60C 9/0238; B60C 13/00; B60C 2009/0269

(86) International application number:
**PCT/JP2022/020441**

(87) International publication number:
**WO 2023/105816 (15.06.2023 Gazette 2023/24)**

(54) **TIRE**

REIFEN

PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.12.2021   JP 2021199587**

(43) Date of publication of application:
**16.10.2024   Bulletin 2024/42**

(73) Proprietor: **BRIDGESTONE CORPORATION**
Chuo-ku
**Tokyo 104-8340 (JP)**

(72) Inventor: **ONO, Takatoshi**
**Tokyo 104-8340 (JP)**

(74) Representative: **Marks & Clerk LLP**
**15 Fetter Lane**
**London EC4A 1BW (GB)**

(56) References cited:
WO-A1-2004/091943    WO-A1-2019/054211
JP-A- 2005 081 864    JP-A- 2021 116 027
US-A1- 2020 148 011    US-A1- 2020 215 857

## Description

TECHNICAL FIELD

This invention relates to a tire.

This application claims Japanese Patent Application No. 2021-199587 filed in Japan on December 8, 2021.

BACKGROUND

There has been a tire in which a side reinforcing rubber is provided in a sidewall portion (PTL 1).

US 2020/148011 A1 relates to a tire suitable for running flat comprising a crown, two sidewalls and two beads, a carcass reinforcement anchored in each bead and a sidewall insert placed in each of the two sidewalls axially internally relative to the carcass reinforcement, such that it is equipped with an electronic device comprising at least one radiofrequency transponder and such that the electronic device is placed radially in a zone representing over 55% of the section height of the tire.

JP 2021 116027 A relates to a safety tire, in which a reinforcement layer is positioned on an inside of a carcass in an axial direction and is positioned on an outside of a bead in a radial direction. An electronic component is positioned between at least one side wall and the carcass. A complex elastic modulus of the reinforcement layer is greater than a complex elastic modulus of the side wall, and a loss tangent of the reinforcement layer is smaller than a loss tangent of the side wall. The electronic component is arranged in a zone from a position that is separated from a maximum thickness position of the reinforcement layer outward by 5% of a cross-sectional height to a position that is separated from the maximum thickness position inward by 5% of the cross-sectional height in the radial direction.

CITATION LIST

Patent Literature

PTL 1: JP2013-71468A

SUMMARY

(Technical Problem)

We have arrived at disposing a communication device (such as a RF tag) in a conventional tire as described above. In addition, we have arrived at a novel configuration that can suppress the damage to the communication device by heat generated by a side reinforcing rubber in run flat running.

It could be helpful to provide a tire that can suppress the damage to the communication device by heat generated by a side reinforcing rubber in run flat running

(Solution to Problem)

Our tire is a tire, including

a side-reinforcing rubber having a crescent-shaped cross section disposed in a side wall portion of the tire, and
a low-thermal-conductivity member, constituted by a coating rubber of a carcass of the tire, having a lower thermal conductivity than that of the side reinforcing rubber and all other rubber members constituting the tire,
a communication device, in which
the low-thermal-conductivity member is positioned between the side reinforcing rubber and the communication device.

(Advantageous Effect)

We can provide a tire that can suppress the damage to the communication device by heat generated by a side reinforcing rubber in run flat running.

BRIEF DESCRIPTION OF THE DRAWINGS

In the accompanying drawings:

2

Fig. 1 is a cross-sectional view in a tire width direction illustrating a portion of a tire according to one of the disclosed embodiments.

Fig. 2 is a perspective view illustrating an example of a communication device that can be use in a tire according to any one of the disclosed embodiments; and

Fig. 3 is an exploded perspective view illustrating the disassembled communication device in Fig. 2.

## DETAILED DESCRIPTION

Our tire can be suitable for use in any type of pneumatic tire, particularly a passenger vehicle pneumatic tire.

By way of example, embodiments of our tire will be described below with reference to the drawings.

Common members and portions appearing in the drawings have the same reference signs. In some of the drawings, the tire width direction is represented by a reference sign "WD", the tire radial direction is represented by a reference sign "RD", and the tire circumferential direction is represented by a reference sign "CD". In this description, the side near the tire inner cavity is referred to as "tire inner side" and the side far from the tire inner cavity from is referred to as "tire outer side".

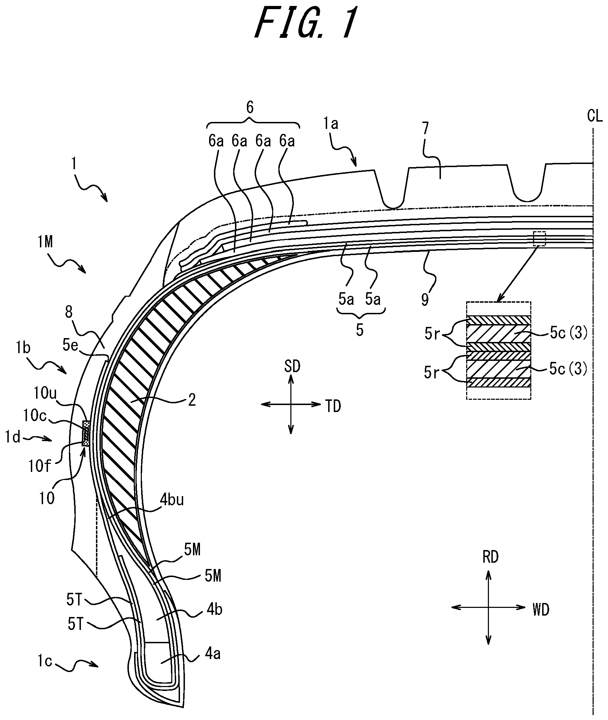

Figs. 1 illustrates a tire 1 according to one of the disclosed embodiments. Fig. 1 is a cross-sectional view in a tire width direction illustrating a portion of a tire according to one of the disclosed embodiments (specifically, a portion of the tire on one side in relation to the tire equatorial plane CL). The tire 1 according to the embodiment in Fig. 1 is a passenger vehicle pneumatic tire.

The tire 1 according to any one of the disclosed embodiments can be any type of a tire.

The tire 1 includes a tire body 1M and a communication device 10. The tire body 1M corresponds to a portion of the tire 1 excluding the communication device 10.

Hereinafter, unless otherwise specified, the positional relationship, dimensions, and the like of the components shall be determined under reference conditions where the tire 1 is installed on an applicable rim, set at a prescribed internal pressure, and unloaded. The width, in a tire width direction, of a contact patch that is contact with a road surface under conditions where the tire 1 is installed in an applicable rim, set at a prescribed internal pressure, and subjected to maximum load is referred to as the ground contact width of a tire, and an end of the contact patch in the tire width direction is referred to as ground contact end.

In this description, the term "applicable rim" refers to a standard rim (Measuring Rim in STANDARDS MANUAL of ETRTO and Design Rim in YEAR BOOK of TRA) having an applicable size that is specified or will be specified in an industrial standard effective in the region where pneumatic tires are produced and used, such as JATMA YEAR BOOK of JATMA (the Japan Automobile Tyre Manufacturers Association) in Japan, STANDARDS MANUAL of ETRTO (The European Tyre and Rim Technical Organisation) in Europe, and YEAR BOOK of TRA (The Tire and Rim Association, Inc.) in the United States. However, with regard to sizes that are not specified in the above-mentioned industrial standards, the term "applicable rim" refers to a rim having a width corresponding to the bead width of a pneumatic tire. The "applicable rim" includes sizes that will be specified in the above-described industrial standards, in addition to currently specified sizes. Examples of "size that will be specified" can include a size specified as "FUTURE DEVELOPMENTS" in ETRTO 2013 version.

In this description, the term "prescribed internal pressure" refers to an air pressure corresponding to the maximum load capacity of one wheel having an applicable size and ply rating that is specified or will be specified in an industrial standard such as the above-described JATMA YEAR BOOK (maximum air pressure). However, with regard to sizes not specified in the above-described industrial standards, the term "prescribed internal pressure" refers to an air pressure corresponding to the maximum load capacity defined for each vehicle in which the tire is installed (maximum air pressure). In this description, the term "maximum load" refers to a load corresponding to the maximum load capacity of a tire having an applicable size defined in the above-described industrial standard, or with regard to sizes not specified in the above-described industrial standards, refers to a load corresponding to the maximum load capacity specified for each vehicle in which a tire is installed.

First of all, the tire body 1M will be described.

As illustrated in Fig. 1, the tire body 1M includes the tread portion 1a, a pair of sidewall portions 1b extending from both ends of the tread portion 1a in the tire width direction toward the tire radially inner side, and a pair of bead portions 1c provided at an end, on the tire radially inner side, of each of the sidewall portions 1b. The tread portion 1a is a tire widthwise portion, of the tire body 1M, between a pair of ground contact ends. The tread portion 1a is a tire widthwise portion, of the tire body 1M, between a pair of ground contact ends. The bead portion 1c is configured to be in contact with a rim on the tire radially inner side and the tire widthwise outer side when the tire 1 is installed on the rim.

The tire body 1M includes a pair of tire side portions 1d extending from both ends of the tread portion 1a in the tire width direction toward the tire radially inner side. The tire side portion 1d consists of a sidewall portion 1b and a bead portion 1c.

The tire body 1M includes a pair of bead cores 4a, a pair of bead fillers 4b, a carcass 5, a belt 6, a tread rubber 7, a side rubber 8, an inner liner 9, and a pair of side reinforcing rubbers 2.

The bead cores 4a are embedded in the respective bead portions 1c. The bead core 4a includes a plurality of bead wire coated with a rubber. The bead wire is preferably made of metal (for example, steel). The bead wire can consist of, for example, monofilaments or twisted wires. The bead wire may be made of organic fibers or carbon fibers.

The bead fillers 4b is positioned on the tire radially outer side relative to the respective bead cores 4a. The bead filler 4b extends, in a tapered manner, toward the tire radially outer side. The bead filler 4b is made of rubber, for example.

The carcass 5 ranges between a pair of bead cores 4a and extends to have a toroidal shape. The carcass 5 is constituted by one or more (in the embodiment in Fig. 1, two) carcass plies 5a. Each of the carcass plies 5a includes one or more carcass cords 5c, and a coating rubber 5r coating a carcass cord 5c (Fig. 1). The carcass cord 5c can be formed by monofilaments or twisted wires.

The carcass cord 5c is preferably made of organic fibers such as polyester, nylon, rayon, and aramid.

The carcass ply 5a includes a ply main body 5M between a pair of bead cores 4a. The carcass ply 5a can further include ply turn-up portions 5T that extend from both ends of the ply main body 5M and are turned up around the bead cores 4a from the tire widthwise inner side toward the tire widthwise outer side. In this regard, the carcass ply 5a may not include a ply turn-up portion 5T.

The ply main body 5M is positioned on the tire widthwise inner side relative to the bead filler 4b and the bead core 4a. The ply turn-up portion 5T is positioned on the tire widthwise outer side relative to the bead filler 4b and the bead core 4a.

The carcass 5 is preferably of radial structure and may be of bias structure.

The belt 6 is disposed on the tire radially outer side in relation to the crown portion of the carcass 5. The belt 6 includes one or more belt layers 6a. Each of the belt layers 6a includes one or more belt cords and a coating rubber coating the belt cord. The belt cord can be formed of monofilaments or twisted wires. The belt cord can be made of metal (for example, steel) and can also be made of organic fibers such as polyester, nylon, rayon, and aramid.

At the tread portion 1a, the tread rubber 7 is positioned on the tire radially outer side of the belt 6. The tread rubber 7 constitutes a tread surface, which is a surface on the tire radially outer side of the tread portion 1a. On the tread surface, a tread pattern is formed.

The side rubber 8 is positioned on the sidewall portion 1b. The side rubber 8 constitutes an outer surface, on the tire widthwise outer side, of the sidewall portion 1b. The side rubber 8 is positioned on the tire widthwise outer side relative to the carcass 5. The side rubber 8 is positioned on the tire widthwise outer side relative to the bead filler 4b. The side rubber 8 is formed to be integrated with the tread rubber 7.

The inner liner 9 is disposed on the tire inner side of the carcass, and can be laminated, for example, on the tire inner side of the carcass 5. The inner liner 9 is made of a butyl-based rubber having low air permeability, for example. Examples of the butyl-based rubbers include butyl rubbers and halogenated butyl rubbers, which are derivatives of butyl rubbers. The inner liner 9 is not limited to a butyl-based rubber and may be made of other rubber compositions, resins, or elastomers.

A side reinforcing rubber 2 is disposed in the sidewall portion 1b. The side reinforcing rubbers 2 are embedded in the respective sidewall portions 1b. Each of the side reinforcing rubbers 2 is disposed on the tire widthwise inner side of the carcass 5. Each of the side reinforcing rubbers 2 is disposed on the tire widthwise outer side of the inner liner 9. The side reinforcing rubber 2 has a crescent-shaped cross section, and in a cross-section in the tire width direction, the thickness of the crescent-shaped cross section gradually decrease toward each of the inner side and the outer side in the tire radial direction, and in addition, the crescent-shaped cross section is curved in a convex manner toward the tire widthwise outer side. In this way, the tire 1 is configured as a run flat tire.

The side reinforcing rubber 2 is configured to reinforce the tire side portion 1d, and under conditions where the internal pressure of the tire 1 is low due to puncture and the like, contributes to supporting of vehicle body weight and suppress vertical deflection of the tire 1, and as a result, allows for running over a certain distance.

The communication device 10 will be described below.

The communication device 10 can be of any configuration as long as the configuration enables wireless communication between the communication device 10 and a predetermined external device (for example, a reader or reader/writer) located at the exterior of the tire 1, and thus, there is no particular limitation on the configuration of the communication device 10.

The communication device 10 preferably includes a RF tag. The RF tag is also referred to as "RFID tag". The RF tag is preferably of passive type but can also be of active type.

The communication device 10 can include an accelerometer detecting the acceleration of the tire 1, and an internal pressure sensor detecting the internal pressure of the tire 1, and the like, instead of or in addition to the RF tag.

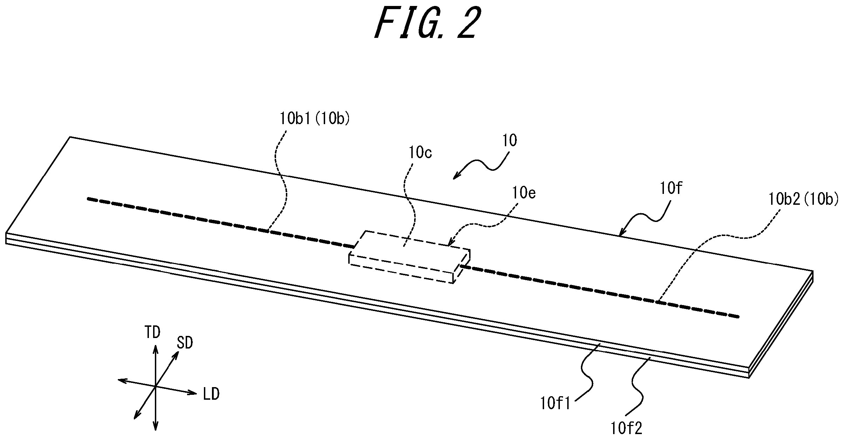

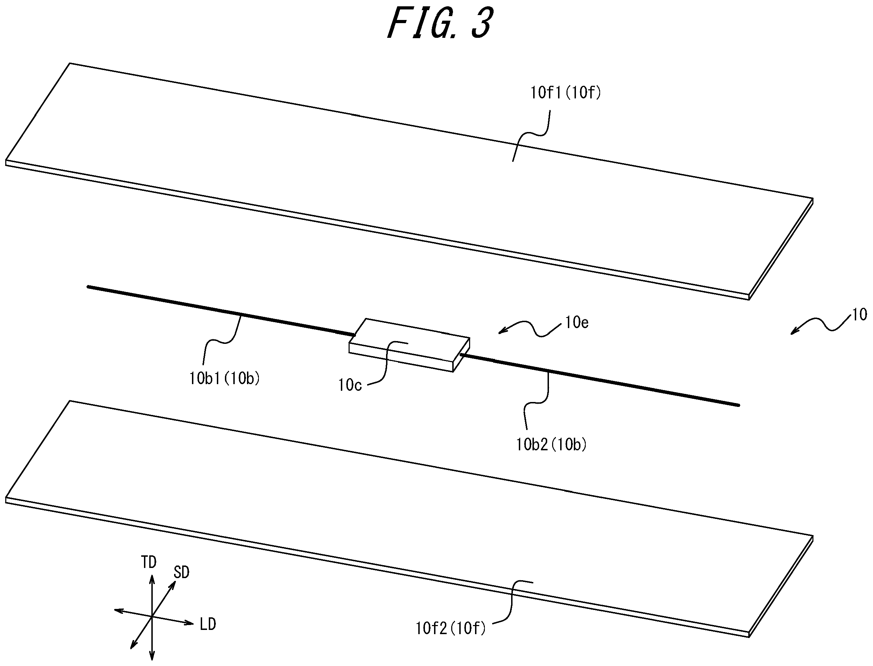

Figs. 2 and 3 illustrates an example of the communication device 10. In this example, the communication device 10 includes a RF tag. In this example, the communication device 10 includes a RF tag 10e and a coating portion 10f. The RF tag 10e includes an IC chip 10c and an antenna portion 10b. The RF tag 10e is of passive type.

The IC chip 10c operates, for example, by an induced electromotive force generated by a radio wave received by the antenna portion 10b. The IC chip 10c includes a controller and a memory unit, for example.

The memory unit can store any information. For example, the memory unit can store identification information of the tire 1. The identification information of the tire 1 is, for example, identification information that is unique to the tire 1 and can identify each tire from the tires, such as the manufacturer of the tire 1, the manufacturing plant of the tire 1, and the date of manufacture of the tire 1. The memory unit can store tire historical information such as the running distance of a tire, the number of sudden braking, the number of sudden starting, and the number of sudden cornering situation. It is also possible that a sensor detecting, for example, a tire internal temperature, a tire internal pressure, a tire acceleration is provided in a tire inner cavity and the memory unit stores information detected by the sensors. In this case, the RF tag 10e can wirelessly communicate with the sensor via the antenna portion 10b to obtain the information detected by the sensor.

The controller is configured to enables reading of information from the memory unit.

The antenna portion 10b includes a pair of antennas 10b1, 10b2. The pair of antenna 10b1, 10b2 are connected to opposite ends of the IC chip 10c, respectively. The antenna portion 10b is configured to allow for transmitting information to and receiving information from the above-described predetermined external device located at the exterior of the tire 1. In the example in Figs. 2 and 3, each of the antennas 10b1, 10b2 extends in a straight line, but each of the antennas 10b1, 10b2 may extend to have any shape such as waved shape.

The entirety of the RF tag 10e is covered with the coating portion 10f. The coating portion 10f is formed of a rubber or a resin, for example.

In this example, a coating portion 10f includes a pair of sheet-shaped coating members 10f1, 10f2. The pair of coating members 10f1, 10f2 are stacked to sandwich the RF tag 10e between the pair of coating members 10f1, 10f2. The pair of coating members 10f1, 10f2 are preferably fixed to each other, for example, by adhesion.

In this regard, the coating portion 10f may be constituted by one member.

In this example, the coating portion 10f has a quadrilateral shape in a planar view. However, the coating portion 10f can have any shape in a planar view.

The communication device 10 may not include the coating portion 10f, that is, can be constituted solely by the RF tag 10e.

By using the antenna portion 10b, the communication device 10 configured as described above can receive information transmitted on a radio wave or a magnetic field from the above-described predetermined external device. Rectification (in the case of radio wave) or resonance (in the case of a magnetic field) generates power in the antenna portion 10b of the communication device 10, and the memory unit and the controller of the IC chip 10c perform a predetermined operation. For example, the controller reads information in the memory unit and returns (transmits) the information on a radio wave or a magnetic field from the antenna portion 10b to the above-described predetermined external device. The above-described predetermined external device receives the radio waves or the magnetic fields from the communication device 10. The above-described predetermined external device can retrieve the received information to obtain the information stored in the memory unit of the IC chip 10c in the communication device 10.

In connection with the matter described above, the communication device 10 can have any configuration other than the configuration illustrated in this example.

The communication device 10 can be provided with a longitudinal direction LD, a short-side direction SD, and a thickness direction TD. The longitudinal direction LD, the short-side direction SD, and the thickness direction TD are perpendicular to one another.

As illustrated in Figs. 2 and 3, when the communication device 10 includes the RF tag 10e, the longitudinal direction LD of the communication device 10 is parallel to the extending direction of the antenna portion 10b. When the antennas 10b1, 10b2 of the antenna portion 10b have waved shapes, the extending direction of the antenna portion 10b refers to the extending direction of the amplitude centerline of each of the antennas 10b1, 10b2. In the communication device 10, when the communication device 10 includes the coating portion 10f, the thickness direction TD of the communication device 10 refers to the thickness direction of the coating portion 10f, and when the communication device 10 does not include the coating portion 10f, refers to the thickness direction of the IC chip 10c.

The length of the RF tag 10e in the longitudinal direction LD is preferably 20 mm or more or 50 mm or more, for example. The length of the RF tag 10e in the longitudinal direction LD is preferably 100 mm or less or 70 mm or less, for example.

The length of the RF tag 10e in the short-side direction SD is preferably 10 mm or less or 8 mm or less, for example.

The length of the RF tag 10e in the thickness direction TD is preferably 5 mm or less or 2 mm or less, for example.

When the communication device 10 includes the coating portion 10f, the length of the communication device 10 in the longitudinal direction LD is preferably 30 mm or more or 60 mm or more, for example. The length of the RF tag 10e in the longitudinal direction LD is preferably 110 mm or less or 80 mm or less, for example.

When the communication device 10 includes the coating portion 10f, the length of the communication device 10 in the short-side direction SD is preferably 20 mm or less or 15 mm or less, for example.

When the communication device 10 includes the coating portion 10f, the length of the communication device 10 in the thickness direction TD is preferably 6 mm or less or 3 mm or less, for example.

The thickness of each of the coating members 10f1, 10f2 of the coating portion 10f is preferably 0.5 mm or more, for example. The thickness of each of the coating members 10f1, 10f2 of the coating portion 10f is preferably 1 mm or less, for example.

In the embodiment in Fig. 1, the communication device 10 is embedded in the tire body 1M. The communication device 10 can be disposed at any position in the tire body 1M.

In producing a tire 1, the raw tire constituting the tire body 1M and the communication device 10 are accommodated in a mold for forming a tire and subjected to vulcanization molding.

In this regard, the communication device 10 can be attached on an outer surface or inner surface of the tire body 1M, instead of being embedded in the tire body 1M.

As illustrated in Fig. 1, the tire 1 (specifically, the tire body 1M) includes one or more low-thermal-conductivity members 3 having a lower thermal conductivity than that of the side reinforcing rubber 2. The one or more low-thermal-conductivity members 3 are positioned between the side reinforcing rubber 2 and the communication device 10.

In the embodiment in Fig. 1, not according to the invention, the carcass cords 5c (cords) of the carcass 5 constitute the respective low-thermal-conductivity members 3. In other words, each of the low-thermal-conductivity members 3 is constituted by the carcass cord 5c (cord) of the carcass 5. In order for the carcass cord 5c to constitute the low-thermal-conductivity member 3 (and hence, have a lower thermal conductivity than that of the side reinforcing rubber 2), for example, the carcass cord 5c may be made of organic fibers such as polyester, nylon, rayon, and aramid.

When the low-thermal-conductivity member 3 is constituted by a cord, not according to the invention, the "thermal conductivity" of the low-thermal-conductivity member 3 shall be measured in accordance with JIS R 1611:2010. When the low-thermal-conductivity member 3 is constituted by a member other than the cord (such as a rubber member), the "thermal conductivity" of the low-thermal-conductivity member 3 shall be measured in accordance with JIS A 1412-2:1999. The "thermal conductivity" of the rubber member (the side reinforcing rubber 2, the coating rubber 5r of the carcass 5, the tread rubber 7, the side rubber 8, and coating portion 10f of the communication device 10) shall be measured in accordance with JIS A 1412-2:1999.

During the running in a state where the internal pressure of the tire 1 is low due to puncture and the like (during the run flat running), heat tends to generate from the side reinforcing rubber 2. The low-thermal-conductivity member 3 is positioned between the side reinforcing rubber 2 and the communication device 10. Therefore, the low-thermal-conductivity member 3 positioned between the side reinforcing rubber 2 and the communication device 10 can block heat from the side reinforcing rubber 2 to suppress for the heat to be transferred to the communication device 10. This can suppress the damage to the communication device 10 by heat.

By suppressing the damage to the communication device 10, even if the tire body 1M is subjected to failure due to puncture and the like, loss of the communication function of the communication device 10 can be suppressed. From a standpoint of managing the tire 1, it is desirable that the communication device 10 have a communication function even after the tire 1 is dismounted from the vehicle for disposal due to failure and the like.

The coating rubber 5r of the carcass 5 constitutes the low-thermal-conductivity member 3.

When the low-thermal-conductivity member 3 is constituted by the member other than the rubber member (cord such as the carcass cord 5c), not according to the invention, the thermal conductivity of the low-thermal-conductivity member 3 is preferably lower than each thermal conductivity of all of the rubber members (such as the tread rubber 7, the side rubber 8, and the coating portion 10f of the communication device 10) constituting the tire 1.

The low-thermal-conductivity member 3 is constituted by the coating rubber 5r of the carcass 5, and the thermal conductivity of the low-thermal-conductivity member 3 is lower than each thermal conductivity of all of other rubber members (such as the tread rubber 7, the side rubber 8, and the coating portion 10f of the communication device 10) constituting the tire 1.

When the low-thermal-conductivity member 3 is constituted by a cord (for example, carcass cord 5c), not according to the invention, the end count of the cord is preferably 20 or more per 50 mm. As a result, the low-thermal-conductivity member 3 can effectively block heat from the side reinforcing rubber 2 to suppress the damage to the communication device 10 by heat further.

The end count of the above-described cord is preferably 65 or less per 50 mm.

As illustrated in the embodiment in Fig. 1, one or more low-thermal-conductivity members 3 are preferably positioned between the side reinforcing rubber 2 and the communication device 10 in the tire width direction. As illustrated in the embodiment in Fig. 1, the communication device 10 can be positioned on the tire widthwise outer side relative to the side reinforcing rubber 2, or can be positioned on the tire widthwise inner side relative to the side reinforcing rubber 2.

As illustrated in the embodiment in Fig. 1, the communication device 10 is preferably positioned between the side rubber 8 and the low-thermal-conductivity member 3. Specifically, as illustrated in the embodiment in Fig. 1, the communication device 10 is preferably positioned between the side rubber 8 and the one or more low-thermal-conductivity members 3 in the tire width direction. One or more low-thermal-conductivity members 3 are positioned on the tire widthwise inner side relative to the side rubber 8.

The side rubber 8 is positioned on the tire radially outermost side, and therefore has high heat dissipation performance. Accordingly, as a result of the matter that the communication device 10 is positioned between the side rubber 8 and the low-thermal-conductivity member 3, the amount of heat applied to the communication device 10 by heat dissipation function of the side rubber 8 can be further reduced, and in consequence, the damage to the communication device 10 by heat can be further suppressed.

In this case, the communication device 10 is preferably in contact with the side rubber 8, as illustrated in Fig. 1.

As illustrated in Fig. 1, the communication device 10 is preferably embedded in the tire side portion 1d of the tire 1.

In general, the metal may weaken a radio wave between the communication device 10 and the above-described predetermined external device (for example, a reader or reader/writer) to reduce communication performance regarding communication between the communication device 10 and the above-described predetermined external device, and in consequence, the communication distance between the communication device 10 and the above-described predetermined external device may be shortened. In the tire body 1M, a metal (for example, steel) can be used in the belt 6, the bead core 4a, and the like. In addition, the tire side portion 1d generally has less amount of metal than the tread portion 1a. Therefore, by disposing the communication device 10 in the tire side portion 1d, in comparison to the case where the communication device 10 is disposed in the tread portion 1a,
the communication performance can be improved and the communication distance between the communication device 10 and the above-described predetermined external device can be lengthened.

The communication device 10 is preferably embedded in a portion of the tire side portion 1d of the tire body 1M on the tire widthwise outer side relative to the carcass 5.

The communication device 10 is preferably oriented in such a way that the thickness direction TD of the communication device 10 is substantially along the tire width direction (Fig. 1).

The direction toward which the communication device 10 is oriented (the orientation of the communication device 10) is arbitrary. However, from a standpoint of, for example, the durability of the communication device 10, the communication device 10 is preferably oriented in such a way that the longitudinal direction LD of the communication device 10 is substantially along the tire circumferential direction, as illustrated in the embodiment in Fig. 1. In this regard, the communication device 10 can be oriented in such a way that the short-side direction SD of the communication device 10 is substantially along the tire circumferential direction.

As illustrated in the embodiment in Fig. 1, the communication device 10 is preferably disposed in the sidewall portion 1b. The sidewall portion 1b generally tends to have less amount of metal than the bead portion 1c. Therefore, by disposing the communication device 10 in the sidewall portion 1b, in comparison to the case where the communication device 10 is disposed in the bead portion 1c, the communication performance can be improved and the communication distance between the communication device 10 and the above-described predetermined external device can be lengthened.

As illustrated in Fig. 1, the tire radially outer end 10u of the communication device 10 (more preferably, the entirety of the communication device 10) is preferably located on the tire radially outer side relative to the tire radially outer end of the bead core 4a. More preferably, the tire radially outer end 10u is located on the tire radially outer side relative to the tire radial center of the bead filler 4b. For example, the tire radially outer end 10u is preferably located on the tire radially outer side relative to the tire radially outer end 4bu of the bead filler 4b.

The above-described configuration is particularly preferable when the tire 1 is a passenger vehicle pneumatic tire.

In a case where the communication device 10 is disposed in the sidewall portion 1b as described above, as illustrated in the example in Fig. 1, the tire radially outer end 10u of the communication device 10 is preferably positioned on the tire radially inner side relative to the tire radially outer end 5e of the ply turn-up portion 5T of the carcass 5. As a result, the communication performance can be improved and the communication distance between the communication device 10 and the above-described predetermined external device can be lengthened. In addition, the communication device 10 can be disposed in a portion of the tire body 1M with relatively small strain, for example, in rolling of the tire 1. Therefore, the durability of the communication device 10 and hence the tire 1 can be improved

The tire radial distance between the tire radially outer end 10u of the communication device 10 and the tire radially outer end 5e of the ply turn-up portion 5T of the carcass 5 is preferably 3 to 30 mm, and more preferably 5 to 15 mm.

The above-described configuration is particularly preferable when the tire 1 is a passenger vehicle pneumatic tire.

As illustrated in the example in Fig. 1, the tire radially outer end 5e of the ply turn-up portion 5T of the carcass 5 is preferably positioned on the tire radially outer side relative to the tire radially outer end 4bu of the bead filler 4b. In this regard, the tire radially outer end 5e of the ply turn-up portion 5T of the carcass 5 can be positioned at the same tire radial position as that of the tire radially outer end of the bead filler 4b or can be positioned on the tire radially inner side relative to the tire radial position of the tire radially outer end of the bead filler 4b.

The tire radially outer end 5e of the ply turn-up portion 5T of the carcass 5 can be positioned on the tire radially outer side relative to the tire maximum width position of the tire body 1M, and can also be positioned at the same tire radial position as that of the tire maximum width position of the tire body 1M, and can also be positioned on the tire radially inner side relative to the tire maximum width position of the tire body 1M. The term "tire maximum width position of the tire body 1M" refers to a tire radial position at which the dimension of the tire body 1M in the tire width direction becomes maximum.

As illustrated in the example in Fig. 1, the communication device 10 is preferably in contact with a surface on the tire widthwise outer side of the carcass 5, and more preferably in contact with a surface on the tire widthwise outer side of the ply turn-up portion 5T of the carcass 5.

The above-described configuration is particularly preferable when the tire 1 is a passenger vehicle pneumatic tire.

The tire rubber composition described in detail below is preferably used in at least a portion of the rubber constituting the tire 1 (for example, at least one of the side rubber 8, the tread rubber 7, the coating rubber 5r of the carcass ply 5a, the squeegee rubber between the carcass plies 5a, the coating rubber of the belt layer 6a, and the bead filler 4b). By using the tire rubber composition, it is possible to achieve a tire 1 that has low rolling resistance and high durability and in which increase in the electric resistance is suppressed without degradation of reinforcing ability and durability performance.

In particular, when the tire rubber composition is used in the side rubber 8, lowered loss can be achieved, and in consequence, the rolling resistance can be reduced. In addition, the amount of heat generated from the side rubber 8 due to the deformation in the rolling is reduced. As a result, the damage to the communication device 10 by heat can be further suppressed accordingly.

< Tire rubber composition >

The above-described tire rubber composition is obtained by blending 35 to 50 parts by mass of carbon black with a nitrogen adsorption specific surface area ($N_2SA$) of 30 to 43 $m^2/g$ and 5 parts by mass or less of oil, based on 100 parts by mass of rubber component including 20 to 40 parts by mass of styrene butadiene rubber and 60 to 80 parts by mass of natural rubber.

Examples of the rubber components used in the above-described tire rubber composition at least include a styrene butadiene rubber (SBR) and a natural rubber (NR).

The content of styrene butadiene rubber is preferably 20 to 40 parts by mass based on 100 parts by mass of rubber component. By setting the content of the styrene butadiene rubber to be 20 parts by mass or more, low-strain crack propagation resistance can be improved to enhance the processability of the unvulcanized rubber. By setting the content of the styrene butadiene rubber to be 40 parts by mass or less, further lowered loss can be achieved.

Examples of styrene butadiene rubbers that can be used include solution-polymerized styrene butadiene rubbers, emulsion-polymerized styrene butadiene rubbers, and modified styrene butadiene rubbers.

The content of the natural rubber is preferably 60 to 80 parts by mass based on 100 parts by mass of rubber component. By setting the content of the natural rubber to be 60 parts by mass or more, the high-strain crack propagation resistance can be improved. By setting the content of the natural rubber to be 80 parts by mass or less, the processability of the unvulcanized rubber can be improved and the costs can be reduced.

Examples of the natural rubber include natural rubbers used in tire industry, such as RSS#3, TSR20, and SIR20.

In addition to the natural rubbers (NR) and styrene butadiene rubbers (SBR) described above, if required, it is possible to use at least one of butadiene rubbers (BR), isoprene rubbers (IR), butyl rubbers (IIR), halogenated butyl rubbers, chloroprene rubbers (CR), acrylonitrile-butadiene rubbers (NBR), ethylene-propylene-diene terpolymers (EPDM).

As a carbon black used in the above-described tire rubber composition, a carbon black with a nitrogen adsorption specific surface area ($N_2SA$, measured in accordance with JIS K 6217-2:2001) of 30 to 43 $m^2/g$ is used. The reason why this nitrogen adsorption specific surface area ($N_2SA$) of the carbon black is limited to the above-described range is because the dispersibility of carbon black is improved by using a carbon black with a large particle size. Preferably, the above-described nitrogen adsorption specific surface area ($N_2SA$) is 33 to 40 $m^2/g$.

As a carbon black having such properties, it is possible to use FEF, GPF, SRF, and the like.

The content of the above-described carbon black is preferably 35 parts by mass or more based on 100 parts by mass of rubber component. As a result, the mechanical strength of the rubber can be ensured.

The content of the above-described carbon black is preferably 50 parts by mass or less based on 100 parts by mass of rubber component. This allows for lowered loss and also reduces the amount of heat generated from the above-described tire rubber composition due to the deformation in the rolling. As a result, the damage to the communication device 10 by heat can be further suppressed accordingly.

Examples of oils used in the above-described tire rubber composition include at least one oil selected from paraffin-based oils, naphthene-based oils, aromatic oils and aromatic-compound-based oils, and these oils can be commercially available products.

For example, as a paraffin-based oil, it is possible to use commercially available products such as a paraffin-based oil under the trade name "Super Oil Y22" manufactured by JX Nippon Oil & Energy Corporation. The naphthene-based oil can be hydrogenated or unhydrogenated. As a naphthene-based oil, it is possible to use commercially available products such as "straight asphalt-containing naphthene-based oil manufactured by SANKYO YUKA KOGYO K.K." under the trade name "A/OMIX".

The content of the above-described oil is 5 parts by mass or less (including 0 parts by mass) based on 100 parts by mass of rubber component.

The mechanical strength of the rubber can be improved by setting the content of the above-described oil to be 5 parts by mass or less. Even in the case where the above-described oil is not included (0 parts by mass), a compounding agent such as a carbon black can be sufficiently dispersed to obtain necessary rubber properties. In particular, the content of the oil is preferably 0 to 3 parts by mass.

For the purpose of providing additional electrical conductivity to decrease the electric resistance further and for the purpose of improving the durability performance further, it is preferable that the above-described tire rubber composition further include at least one of Ketjen black and a carbon nanotube (CNT).

As carbon nanotubes (CNT) that can be used, there may be mentioned graphene sheets in the form of rounded rods or in the form of threads, vapor grown carbon fibers (VGCF), and the like and C100 (manufactured by Arkemasya) or NC7000 (manufactured by Nanocyl), which are commercially available products of the foregoing, is usable. These carbon nanotubes (CNT) provides additional electrical conductivity, and unlike the above-described carbon black, interacts less with the rubber, resulting in lower elastic modulus the high-strain region of the high strain curve of the stress-strain curve and an increased elongation at break (Eb). Accordingly, when Eb of the rubber in crack propagation is high, relaxation of crack tip energy occurs to improve the crack propagation resistance.

As Ketjen black, it is possible to use various grades of Ketjen black containing hollow shell-shaped particles and having high electrical conductivity. Examples of Ketjen black that can be used include at least one of Ketjen black EC300J [granulated] manufactured by Lion Corporation, Ketjen black EC600JD [granulated], CARBON ECP [powder of Ketjen black EC300J], CARBON ECP600JD [powder of Ketjen black EC600JD], and Lionite.

The total compounding amount of Ketjen black and the carbon nanotube is preferably 0.1 to 6 parts by mass, more preferably 1.0 to 5 parts by mass based on 100 parts by mass of rubber component.

By setting the total compounding amount of Ketjen black and the carbon nanotube to be 0.1 parts by mass or more, a rubber compound can be provided with electrical conductivity. By setting such total compounding amount to be 6 parts by mass or less, decrease in the low loss property of the rubber can be prevented.

In the above-described tire rubber composition, a carbon black, Ketjen black and a carbon nanotube with a nitrogen adsorption specific surface area ($N_2SA$) satisfying the above-described range are used as fillers. However, for the purpose of providing better electrical conductivity and for the purpose of further improving the crack propagation resistance to improve the durability performance further, it is preferable that at least one of Ketjen black and a carbon nanotube be blended in an amount of preferably 2 to 15%, more preferably 2.5 to 12.5%, by mass of the fillers.

As fillers other than carbon black, Ketjen black, carbon nanotube described above, it is possible to use silica, clay, talc, calcium carbonate, and the like.

In addition to the above-described components, other components can be appropriately selected according to the purpose or the need and blended into the above-described tire rubber composition. Examples of the other components include vulcanizing agents such as sulfur, vulcanization accelerators such as thiazole-based and sulfenamide-based vulcanization accelerators, vulcanizing co-agents, zinc oxide (zinc white), stearic acid, age resisters, antioxidants, antiozonants, colorants, lubricants, silane coupling agent, foaming agents, additives such as foaming aids, as well as a variety of known compounding ingredients ordinally used in the tire industry. The other components described above can be commercially available products.

The above-described tire rubber composition can be prepared by blending a carbon black, an oil, and other components having the above-described properties into the above-described rubber component, and in addition, kneading Ketjen black, carbon nanotube, zinc white, stearic acid, an age resister, sulfur, a vulcanization accelerator, and additives appropriately selected according to the purpose or the need into the rubber component.

There is no particular limitation regarding the conditions of kneading described above. Conditions such as the capacity of kneader, the rotational velocity of the rotor, the ram pressure, the kneading temperature, the kneading time, and the type of the kneader can be appropriately selected according to the purpose. Examples of such a kneader include Banbury mixers, Intermix, kneaders, and rolls ordinally used in kneading of a rubber composition.

In the case where the compounding amount of the styrene butadiene rubber in the above-described tire rubber composition is A parts by mass and the compounding amount of the natural rubber is B parts by mass, a rubber composition in which a carbon black with a nitrogen adsorption specific surface area ($N_2SA$) of 30 to 43 $m^2/g$ included in the above-described tire rubber composition is blended in an amount of A * 100 / (A + B) (% by mass) based on A parts by mass of styrene butadiene rubber is taken as rubber composition X. In addition, a rubber composition in which a carbon black with a nitrogen adsorption specific surface area ($N_2SA$) of 30 to 43 $m^2/g$ included in the above-described tire rubber composition is blended in an amount of B * 100 / (A + B) (% by mass) based on B parts by mass of natural rubber is taken as rubber composition Y. Also, the above-described tire rubber composition is taken as rubber composition Z. In this case, when moduli at 50% elongation of the rubber compositions X, Y, and Z are taken as Mdx, Mdy, and Mdz (MPa), respectively, it is preferable that Mdx, Mdy, and Mdz satisfy the formula (I):

$$0.9 \times \{Mdx * A / (A + B) + Mdy * B / (A + B)\} \geq Mdz \cdots (I).$$

When the tire rubber composition satisfies the formula (I), increase in the electric resistance is further suppressed without degradation of reinforcing ability and durability performance, the rolling resistance is further reduced, and in addition, higher durability is achieved.

As described above, the above-described tire rubber composition is applied to at least one member selected from the ply coating rubber of the carcass ply, the belt coating rubber of the belt layer, the squeegee rubber between the carcass plies, the cushion rubber, the belt under cushion, and the bead filler rubber. The tire rubber composition is preferably applied to a ply coating rubber because the amount of the rubber used for the ply coating rubber is large and this has a significant influence on the loss property of the entirety of the tire, and also, the ply coating rubber is positioned at the center of a conductive path from the trim to the tread. As a result, a pneumatic tire establishing a balance between lowered loss, crash resistance/reinforcing ability, electrical conductivity can be achieved.

By using the tire rubber composition configured as described above, the durability performance in high-strain region is improved by setting the amount of natural rubber (NR) to be in a specific range, and also, the low-strain durability is improved without deterioration of lowered loss by setting the amount of styrene butadiene rubber (SBR) to be in a specific range. In addition, the lowered loss of the rubber is achieved by using a carbon black with a nitrogen adsorption specific surface area ($N_2SA$) limited to the above-described range, and also, the reinforcing ability is improved by setting the amount of the oil to be in a predetermined amount or less. Therefore, the tire rubber composition configured as described above can be helpful to provide a tire that has low rolling resistance and high durability and also has reinforcing ability and durability performance equivalent to those of conventional tire, and in the tire, increase in the electric resistance is suppressed.

In addition, by inclusion of 0.1 to 6 parts by mass of at least one of Ketjen black and a carbon nanotube, a tire rubber composition having better electrical conductivity without deterioration of dispersion defect and low loss property is provided. It is known that conductive materials generally have poor dispersibility, deteriorates low loss property, and weakly interact with the rubbers. However, as a result of studying the types and the number of parts of the conductive materials, we can provide additional electrical conductivity, without deterioration of dispersion defect and lowered loss, by blending at least one of Ketjen black and a carbon nanotube at a specific number of parts. In addition, by utilizing low reinforcing ability of the above-mentioned conductive materials, the tire rubber composition has better durability performance.

In addition, the above-described tire rubber composition in which at least one of Ketjen black and a carbon nanotube is blended in an amount of 2 to 15% by mass of the fillers is advantageous because the tire rubber composition still has the above-described lowered loss and reinforcing ability, and yet provides additional electrical conductivity and better durability performance.

INDUSTRIAL APPLICABILITY

Our tire can be suitable for use in any type of pneumatic tire, particularly a passenger vehicle pneumatic tire.

REFERENCE SIGNS LIST

| | |
|---|---|
| 1 | Tire |
| 1M | Tire body |
| 1a | Tread portion |
| 1b | Sidewall portion |
| 1c | Bead portion |
| 1d | Tire side portion |
| 2 | Side reinforcing rubber |
| 3 | Low thermal conductive member |
| 4a | Bead core |
| 4b | Bead filler |
| 4bu | Tire radially outer end of bead filler |

| | |
|---|---|
| 5 | Carcass |
| 5a | Carcass ply |
| 5c | Carcass cord (cord) |
| 5r | Coating rubber |
| 5M | Ply main body |
| 5T | Ply turn-up portion |
| 5e | Tire radially outer end of ply turn-up portion of carcass |
| 6 | Belt |
| 6a | Belt layer |
| 7 | Tread rubber |
| 8 | Side rubber |
| 9 | Inner liner |
| 10 | Communication device |
| 10e | RF tag |
| 10b | Antenna portion |
| 10b1, 10b2 | Antennas |
| 10f | Coating portion |
| 10f1, 10f2 | Coating members |
| 10c | IC chip |
| 10u | Tire radially outer end of communication device |
| CL | Tire equatorial plane |
| WD | Tire width direction |
| RD | Tire radial direction |
| CD | Tire circumferential direction |
| LD | Longitudinal direction of communication device |
| SD | Short-side direction of communication device |
| TD | Thickness direction of communication device |

**Claims**

1. A tire (1), comprising:

   a side-reinforcing rubber (2) having a crescent-shaped cross section disposed in a side wall portion (1b) of the tire;
   a low-thermal-conductivity member (3), constituted by a coating rubber (5r) of a carcass (5) of the tire, having a lower thermal conductivity than that of the side reinforcing rubber (2) and all other rubber members (7, 8, 10f) constituting the tire; and
   a communication device (10), wherein
   the low-thermal-conductivity member (3) is positioned between the side reinforcing rubber (2) and the communication device (10).

2. The tire (1) according to claim 1, wherein
   the communication device (10) is positioned between a side rubber (8) of the tire and the low-thermal-conductivity member (3).

3. The tire (1) according to any one of claims 1 or 2, wherein
   a content of carbon black in the side rubber (8) of the tire is 50 parts by mass or less based on 100 parts by mass of rubber component.

4. The tire (1) according to any one of claims 1 to 3, wherein
   the communication device (10) includes a RF tag.


**Patentansprüche**

1. Reifen (1), umfassend:

   einen Seitenverstärkungsgummi (2), der einen halbmondförmigen Querschnitt aufweist, in einem Seitenwandabschnitt (1b) des Reifens angeordnet;

ein Element (3) mit geringer Wärmeleitfähigkeit, das aus einem Beschichtungsgummi (5r) einer Karkasse (5) des Reifens besteht und eine geringere Wärmeleitfähigkeit als die des Seitenverstärkungsgummis (2) und aller anderen Gummielemente (7, 8, 10f) aufweist, aus denen der Reifen besteht; und
eine Kommunikationsvorrichtung (10), wobei
das Element (3) mit geringer Wärmeleitfähigkeit zwischen dem Seitenverstärkungsgummi (2) und der Kommunikationsvorrichtung (10) positioniert ist.

2.  Reifen (1) nach Anspruch 1, wobei
die Kommunikationsvorrichtung (10) zwischen einem Seitengummi (8) des Reifens und dem Element (3) mit geringer Wärmeleitfähigkeit positioniert ist.

3.  Reifen (1) nach einem der Ansprüche Anspruch 1 oder 2, wobei
ein Gehalt an Ruß im Seitengummi (8) des Reifens 50 Massenteile oder weniger beträgt, basierend auf 100 Massenteilen der Gummikomponente.

4.  Reifen (1) nach einem der Ansprüche 1 bis 3, wobei
die Kommunikationsvorrichtung (10) ein RF-Tag beinhaltet.

**Revendications**

1.  Pneu (1), comprenant :

    un caoutchouc de renforcement latéral (2) présentant une section transversale en forme de croissant disposé dans une portion de paroi latérale (1b) du pneu ;
    un organe à faible conductivité thermique (3), constitué d'un caoutchouc de revêtement (5r) d'une carcasse (5) du pneu, présentant une conductivité thermique inférieure à celle du caoutchouc de renforcement latéral (2) et de tous les autres organes de caoutchouc (7, 8, 10f) constituant le pneu ; et
    un dispositif de communication (10), dans lequel
    l'organe à faible conductivité thermique (3) est positionné entre le caoutchouc de renforcement latéral (2) et le dispositif de communication (10).

2.  Pneu (1) selon la revendication 1, dans lequel
    le dispositif de communication (10) est positionné entre un caoutchouc latéral (8) du pneu et l'organe à faible conductivité thermique (3).

3.  Pneu (1) selon l'une quelconque des revendications 1 ou 2, dans lequel
    une teneur en noir de carbone dans le caoutchouc latéral (8) du pneu est de 50 parties en masse ou moins sur la base de 100 parties en masse de composant de caoutchouc.

4.  Pneu (1) selon l'une quelconque des revendications 1 à 3, dans lequel
    le dispositif de communication (10) inclut une étiquette RF.

*FIG. 1*

# FIG. 2

# FIG. 3

10f1 (10f)

10e

10b1 (10b)

10c

10b2 (10b)

10

10f2 (10f)

TD
SD
LD

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021199587 A
- US 2020148011 A1
- JP 2021116027 A
- JP 2013071468 A

**Non-patent literature cited in the description**

- FUTURE DEVELOPMENTS. ETRTO. 2013